# EUROPÄISCHE PATENTSCHRIFT

(11) **EP 3 044 047 B1**
(45) Veröffentlichungstag und Bekanntmachung des Hinweises auf die Patenterteilung: **07.10.2020**
(21) Anmeldenummer: 14747396.1
(22) Anmeldetag: 05.08.2014
(51) Int. Cl.: B60S 1/38

(54) **STRUKTURVARIANTEN FÜR FIN RAY-WISCHER**
STRUCTURAL VARIANTS FOR FIN RAY WIPERS
VARIANTES DE STRUCTURE POUR ESSUIE-GLACE À ÉPINE DE NAGEOIRE

(30) Priorität: 09.09.2013 DE 102013217951
(43) Veröffentlichungstag der Anmeldung: 20.07.2016
(73) Patentinhaber: Robert Bosch GmbH, 70442 Stuttgart (DE)
(72) Erfinder: HACKL, Viktor, H-9400 Sopron (HU); DEAK, Peter, H-1188 Budapest (HU); WEILER, Michael, 77815 Buehl (DE); BREUER, Bodo, 76189 Karlsruhe (DE)
(86) Internationale Anmeldenummer: PCT/EP2014/066831
(87) Internationale Veröffentlichungsnummer: WO 2015/032566

(56) Entgegenhaltungen:
- DE-A1- 1 918 917
- JP-U- H0 542 020
- US-B1- 6 836 925

## Beschreibung

### Strukturvarianten für Fin Rav-Wischer

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird (siehe z.B. Dokument JPH0542020U). Dabei wird das Wischblatt zwischen einer ersten Wendelage und einer zweiten Wendelage bewegt. Zu diesem Zweck ist der Wischerarm über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen. Es gilt bei Wischvorrichtungen für Fahrzeuge dabei zu berücksichtigen, dass der Kostendruck stetig steigt und dass die Fahrzeuge in einer Vielzahl von klimatischen Bedingungen zum Einsatz kommen können, so dass z.B. extreme Temperaturwerte dauerhaft und/oder mit großen Schwankungen auftreten.

### Offenbarung der Erfindung

Es ist die Aufgabe der vorliegenden Erfindung, ein zuverlässiges, weitgehend schlierenfreies Wischen einer Scheibe eines Fahrzeugs zu gewährleisten.

Diese Aufgabe wird gelöst durch eine Scheibenwischvorrichtung mit den Merkmalen gemäß Anspruch 1.

Gemäß Ausführungsformen der vorliegenden Erfindung wird eine Scheibenwischvorrichtung, nach dem Flossenstrahl-Prinzip, für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren sind die Verbindungselemente relativ zum Unterteil so angeordnet, dass sich in einem unbelasteten Zustand des Wischblatts ein Winkel αₙ der jeweiligen Längsachsen der Verbindungselemente relativ zum Unterteil zumindest teilweise entlang einer Längserstreckung des Wischblatts verändert, insbesondere monoton verändert, weiterhin insbesondere streng monoton verändert.

Bevorzugte Ausführungsformen und besondere Aspekte der Erfindung ergeben sich aus den abhängigen Ansprüchen, den Zeichnungen und der vorliegenden Beschreibung.

Gemäß einer Ausführungsform der Erfindung wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren weist das Oberteil des Wischblatts entlang einer Längserstreckung des Wischblatts eine variierende Dicke auf. Insbesondere nimmt die Dicke des Oberteils entlang der Längserstreckung des Wischblatts zu einem Ende des Wischblatts hin ab. Bevorzugte Ausführungsformen und besondere Aspekte einer solchen Ausführungsform der Erfindung ergeben sich aus den abhängigen Ansprüchen, den Zeichnungen und der vorliegenden Beschreibung.

Gemäß einer Ausführungsform der Erfindung wird eine Scheibenwischvorrichtung, nach dem Flossenstrahl-Prinzip, für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren weist das Unterteil des Wischblatts entlang einer Längserstreckung des Wischblatts eine variierende Dicke auf. Bevorzugte Ausführungsformen und besondere Aspekte einer solchen Ausführungsform der Erfindung ergeben sich aus den abhängigen Ansprüchen, den Zeichnungen und der vorliegenden Beschreibung.

Gemäß Ausführungsformen der Offenbarung, die mit anderen hierin beschriebenen Ausführungsformen kombiniert werden können, wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren ist das Wischblatt derart konfiguriert, dass das Wischblatt entlang der Längserstreckung des Wischblatts mindestens eine Krümmungsänderung aufweist, insbesondere einen Vorzeichenwechsel in der Krümmung. Bevorzugte Ausführungsformen und besondere Aspekte einer solchen Ausführungsform der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete hergestellt werden. Die vorliegenden Ausführungsformen der Scheibenwischvorrichtung, bei welchen die Verbindungselemente relativ zum Unterteil so angeordnet sind, dass sich in einem unbelasteten Zustand des Wischblatts ein Winkel αₙ der jeweiligen Längsachsen der Verbindungselemente relativ zum Unterteil zumindest teilweise entlang einer Längserstreckung des Wischblatts verändert, ermöglichen eine besonders gute Anpassung an die Krümmung einer Scheibe. Dies gewährleistet ein besonders gutes und exaktes Wischen der Scheibe. Nicht gewischte Bereiche der Scheibe und eine Schleierbildung auf der Scheibe können weitgehend vermieden werden. Die konstruktive Ausgestaltung der herein beschriebenen Scheibenwischvorrichtung ermöglicht einen weitgehend gleichmäßigen Anpressdruck der Scheibenwischvorrichtung auf der Scheibe, so dass eine hohe Wischqualität bereitgestellt wird.

Gemäß einigen Ausführungsformen, die mit anderen Ausführungsformen kombiniert werden können, kann sich in einem unbelasteten Zustand des Wischblatts ein Winkel αₙ der jeweiligen Längsachsen der Verbindungselemente relativ zum Unterteil zumindest teilweise entlang einer Längserstreckung des Wischblatts stetig verändern, d.h. zunimmt oder abnimmt. Da es sich bei den Winkeln der Verbindungselemente um diskrete Werte handelt ist "stetig" in diesem Zusammenhang und in anderen Zusammenhängen im Rahmen dieser Offenbarung nicht streng mathematisch zu definieren sondern im Sinne von "ständig", "beständig", und/oder "ohne Unterbrechung".

Gemäß Ausführungsformen der Scheibenwischvorrichtung, welche mit anderen Ausführungsformen kombiniert werden können, weist das Wischblatt zumindest einen ersten Bereich auf, in dem der Winkel αₙ der Längsachsen der Verbindungselemente relativ zum Unterteil entlang einer Längserstreckung des Wischblatts zu einem Wischblattende hin abnimmt, insbesondere monoton, insbesondere streng monoton abnimmt. Ferner kann die Scheibenwischvorrichtung zumindest einen zweiten Bereich aufweisen in dem der Winkel αₙ der Längsachsen der Verbindungselemente relativ zum Unterteil entlang einer Längserstreckung des Wischblatts zu einem Wischblattende hin zunimmt, insbesondere monoton, insbesondere streng monoton zunimmt. Somit wird eine Scheibenwischvorrichtung bereitgestellt, welche eine besonders gute Anpassung an die Krümmung einer Scheibe ermöglicht. Typischerweise, ist der erste Bereich mit abnehmenden Winkeln näher am Ende der Scheibenwischvorrichtung bzw. näher an der äußeren Verbindungsposition des Oberteils und des Unterteils, während der zweite Bereich näher am Anschlussstück liegt bzw. eine Halterung oder einem Befestigungsteil der Scheibenwischvorrichtung.

Gemäß Ausführungsformen der Scheibenwischvorrichtung, welche mit anderen Ausführungsformen kombiniert werden können, sind die Verbindungselemente derart konfiguriert sind, dass sich der Abstand zwischen dem Oberteil und dem Unterteil zumindest teilweise entlang einer Längserstreckung des Wischblatts verändert, insbesondere stetig entlang einer Längserstreckung des Wischblatts verändert. Der Abstand kann zwischen dem Oberteil und dem Unterteil entlang der Längserstreckung des Wischblatts in einem ersten Bereich des Wischblatts abnehmen und in einem zweiten des Wischblatts zunehmen. Ferner kann das Wischblatt einen Bereich umfassen, in welchem der Abstand zwischen dem Oberteil und dem Unterteil entlang der Längserstreckung des Wischblatts im Wesentlichen konstant ist. Somit wird eine Scheibenwischvorrichtung bereitgestellt, welche eine verbesserte Anpassung an die Krümmung einer Scheibe ermöglicht.

Gemäß Ausführungsformen der Scheibenwischvorrichtung, welche mit anderen Ausführungsformen kombiniert werden können, sind die Verbindungselemente derart konfiguriert, dass der sich verändernde Abstand zwischen dem Oberteil und dem Unterteil entlang einer Längserstreckung des Wischblatts zu einem Wischblattende hin ein Abstandsminimum durchläuft. Das Abstandsminimum zwischen dem Oberteil und dem Unterteil kann zwischen einem Anschlussstück und einer Verbindungsposition des Oberteils und Unterteils entlang einer Längserstreckung des Wischblatts angeordnet sein. Das Abstandsminimum zwischen dem Oberteil und dem Unterteil kann in etwa mittig entlang einer Längserstreckung des Wischblatts angeordnet sein. Ferner kann das Abstandsminimum zwischen dem Oberteil und dem Unterteil auch an einem Bereich des Wischblatts angeordnet sein, welcher zum Wischblattende hin verschoben ist. Somit wird eine Scheibenwischvorrichtung bereitgestellt, welche eine besonders gute Anpassung an die Krümmung einer Scheibe ermöglicht.

Gemäß Ausführungsformen der Scheibenwischvorrichtung, welche mit anderen Ausführungsformen kombiniert werden können, sind die Verbindungselemente gelenkig mit dem Unterteil und/oder dem Oberteil verbunden. Insbesondere sind die Verbindungselemente mit dem Unterteil und/oder dem Oberteil mittels eines ersten Filmscharniers verbunden. Das erste Filmscharnier kann einteilig mit dem Verbindungselement und dem Oberteil und/oder dem Unterteil ausgebildet sein. Die einteilige Ausgestaltung der Filmscharniere erlaubt eine einfache und kostengünstige Herstellung. So können die Wischblätter bzw. die Scheibenwischvorrichtungen bei entsprechender Ausgestaltung werkzeugfallend zur Verfügung gestellt werden. Darüber hinaus wird durch die Verwendung von Filmscharnieren, insbesondere durch die einteilig Ausführung der Filmscharniere mit den Verbindungselementen und dem Oberteil und/oder dem Unterteil eine Herstellung im Spritzgussverfahren ermöglicht.

Gemäß Ausführungsformen der Scheibenwischvorrichtung, welche mit anderen Ausführungsformen kombiniert werden können, nimmt die Breite des Unterteils und/oder die Breite des Oberteils entlang der Längserstreckung des Wischblatts zu einem Wischblattende ab, insbesondere stetig ab. Somit wird eine Scheibenwischvorrichtung bereitgestellt, welche ein zum Ende des Wischblatts hin abnehmendes Trägheitsmoment aufweist. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine verbesserte Anpassung an die Scheibe und eine hohe Wischqualität bereitgestellt wird.

Gemäß Ausführungsformen der Scheibenwischvorrichtung, welche mit anderen Ausführungsformen kombiniert werden können, nimmt die Dicke des Oberteils entlang der Längserstreckung des Wischblatts zu einem Wischblattende ab, insbesondere monoton ab. Gemäß Ausführungsformen nimmt die Dicke des Oberteils entlang der Längserstreckung des Wischblatts zu einem Wischblattende monoton, insbesondere streng monoton ab. Dadurch kann eine Scheibenwischvorrichtung bereitgestellt werden, welche ein zum Ende des Wischblatts hin abnehmendes Trägheitsmoment aufweist. Somit wird eine Scheibenwischvorrichtung bereitgestellt, mit welcher ein weitgehend gleichmäßiger Anpressdruck der Scheibenwischvorrichtung auf der Scheibe als auch eine homogene Kraftverteilung der Scheibenwischvorrichtung möglich ist, so dass eine verbesserte Anpassung an die Scheibe und eine hohe Wischqualität gewährleistet werden kann.

Gemäß Ausführungsformen der Scheibenwischvorrichtung, welche mit anderen Ausführungsformen kombiniert werden können, variiert die Dicke des Unterteils entlang der Längserstreckung des Wischblatts. Gemäß Ausführungsformen, weist das Unterteil mehrere Bereiche mit einer geringeren Dicke und mehrere Bereiche mit einer höheren Dicke auf. Typischerweise sind die Bereiche mit der geringeren Dicke und die Bereiche mit der höheren Dicke abwechselnd entlang der Längserstreckung des Wischblatts angeordnet. Gemäß Ausführungsformen, werden die Bereiche geringerer Dicke durch Filmscharniere gebildet, die mit den Bereichen mit höheren Dicken verbunden sind, insbesondere einteilig verbunden sind. Dadurch wird eine Scheibenwischvorrichtung mit einer verbesserten Anpassungsfähigkeit an eine Scheibe bereitgestellt, wodurch eine hohe Wischqualität gewährleistet werden kann.

Gemäß Ausführungsformen der Scheibenwischvorrichtung, welche mit anderen Ausführungsformen kombiniert werden können, umfasst das Unterteil mehrere Unterteilsegmente, welche gelenkig miteinander verbunden sind. Gemäß Ausführungsformen der Scheibenwischvorrichtung, sind die Unterteilsegmente mittels eines zweiten Filmscharniers miteinander verbunden. Gemäß weiteren Ausführungsformen der Scheibenwischvorrichtung, ist das zweite Filmscharnier einteilig mit den Unterteilsegmenten ausgeführt. Dadurch wird eine Scheibenwischvorrichtung mit einer verbesserten Anpassungsfähigkeit an eine Scheibe bereitgestellt, wodurch eine hohe Wischqualität gewährleistet werden kann. Die einteilige Ausgestaltung der zweiten Filmscharniere erlaubt eine einfache und kostengünstige Herstellung. So können die Wischblätter bzw. die Scheibenwischvorrichtungen bei entsprechender Ausgestaltung werkzeugfallend zur Verfügung gestellt werden.

Gemäß Ausführungsformen der Scheibenwischvorrichtung, welche mit anderen Ausführungsformen kombiniert werden können, ist eine Mehrzahl der Verbindungselemente mit den Bereichen höherer Dicke des Unterteils verbunden, insbesondere ungefähr mittig mit den Bereichen höherer Dicke des Unterteils verbunden. Gemäß Ausführungsformen der Scheibenwischvorrichtung, werden die Bereiche höherer Dicke des Unterteils durch Unterteilsegmente gebildet. Gemäß Ausführungsformen der Scheibenwischvorrichtung, ist eine Mehrzahl der Verbindungselemente mit den Unterteilsegmenten verbunden, insbesondere in etwa mittig mit den Unterteilsegmenten verbunden. Somit wird eine Scheibenwischvorrichtung bereitgestellt, mit welcher eine verbesserte Anpassungsfähigkeit an eine Scheibe bereitgestellt werden kann. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden. Dadurch wird eine Scheibenwischvorrichtung mit hoher Wischqualität bereitgestellt.

Gemäß Ausführungsformen der Scheibenwischvorrichtung, welche mit anderen Ausführungsformen kombiniert werden können, ist die Scheibenwischvorrichtung aus mindestens einem Material aus der Gruppe bestehend aus: POM, PA, TPE, insbesondere TPE-S, TPE-O, TPE-U, TPE-A TPE-V und TPE-E. Die Materialwahl der Scheibenwischvorrichtung erlaubt für eine Auswahl der Materialeigenschaften und damit eine Einstellung der physikalischen, insbesondere mechanischen, Eigenschaften der Scheibenwischvorrichtung. Ferner ermöglicht die Materialwahl aus der Gruppe bestehend aus: POM, PA, TPE, insbesondere TPE-S, TPE-O, TPE-U, TPE-A TPE-V und TPE-E eine Herstellung im Spritzgussverfahren, insbesondere in einem 2-Komponenten Spritzverfahren. Dadurch kann einfach und kostengünstig herstellbare Scheibenwischvorrichtung zur Verfügung gestellt werden.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung eines Wischblatts gemäß Ausführungsformen der Offenbarung in einer Grundstellung,
Figur 2 eine schematische Darstellung eines Wischblatts gemäß Ausführungsformen der Offenbarung in einer an eine Scheibe angelegten Stellung,
Figur 3 eine schematische Darstellung eines Wischblatts gemäß Ausführungsformen der Offenbarung in einer Grundstellung,
Figur 4 eine schematische perspektivische Darstellung eines Wischblatts einer Scheibenwischvorrichtung gemäß Ausführungsformen der Offenbarung,
Figur 5 eine schematische Darstellung eines Wischblatts gemäß Ausführungsformen der Offenbarung in einer Grundstellung,
Figur 6 eine schematische Darstellung eines Ausschnitts des Wischblatts nach Fig. 5,
Figur 7 eine schematische Darstellung eines weiteren Ausschnitts des Wischblatts nach Fig. 5,
Figur 8 eine schematische Darstellung eines Wischblatts gemäß Ausführungsformen der Offenbarung
Figur 9A eine schematische Darstellung eines Wischblatts einer Scheibenwischvorrichtung gemäß Ausführungsformen der Offenbarung in einer Grundstellung,
Figur 9B eine schematische Darstellung des Wischblatts einer Scheibenwischvorrichtung gemäß Ausführungsformen der Offenbarung nach Fig. 6A in einer an eine Scheibe angelegten Stellung,
Figur 10A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 10B eine schematische Darstellung des Wischerarms mit integriertem Wischblatt nach Fig. 7A in einer an eine Scheibe angelegten Stellung,
Figur 11A eine schematische Darstellung eines Ausschnitts des Wischblatts nach Fig. 10A,
Figur 11B eine schematische Darstellung eines Ausschnitts des Wischblatts nach Fig. 10B.

### Ausführungsformen der Erfindung

Im Folgenden werden, sofern nicht anders vermerkt, für gleiche und gleichwirkende Elemente gleiche Bezugszeichen verwendet.

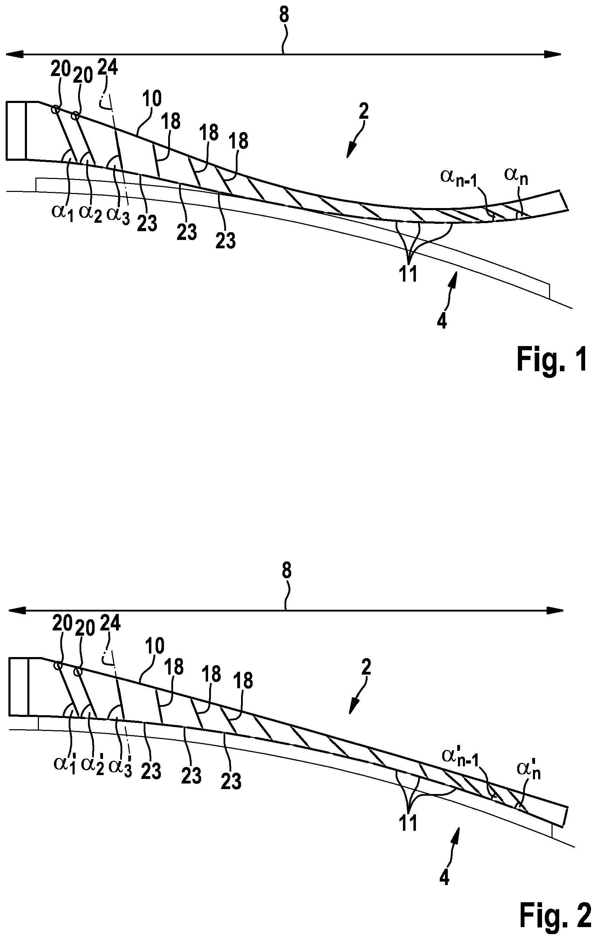

Figuren 1 und 2 zeigen schematische Darstellungen eines Wischblatts 2 einer Scheibenwischvorrichtung für ein Fahrzeug, insbesondere für ein Kraftfahrzeug, in einer Grundstellung (Figur 1), d.h. in einem unbelastetem Zustand, und in einer an eine Scheibe 4 angelegten Stellung (Figur 2) gemäß den hierein beschrieben Ausführungsformen. Das Wischblatt umfasst ein langgestrecktes Oberteil 10 und einem langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang einer Längserstreckung 8 des Wischblatts 2 verändert, insbesondere stetig verändert bzw. monoton oder streng monoton verändert.

In dem in Figur 1 dargestellten Wischblatt im unbelastetem Zustand sind die Winkel αₙ der jeweiligen Längsachsen der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts, d.h. in einer an die Scheibe angelegten Stellung, wie sie beispielhaft in Fig.2 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen sind die Winkel αₙ der jeweiligen Längsachsen der Verbindungselemente 18 relativ zum Unterteil 12, die sich entlang der Längserstreckung 8 des Wischblatts 2 ändern in dem in Fig. 2 dargestellten Wischblatt, welches sich in einer die Scheibe befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt zumindest einen ersten Bereich auf, in dem der Winkel αₙ der Längsachsen 24 der Verbindungselemente 18 relativ zum Unterteil 12 entlang einer Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang einer Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 1 und 2 dargestellt, ist der zweite Bereich des Wischblatts, in dem der Winkel αₙ der Längsachsen 24 der Verbindungselemente 18 relativ zum Unterteil 12 entlang der Längserstreckung 8 des Wischblatts 2 zu einem Wischblattende hin zunimmt an einer inneren Position des Wischblatts angeordnet, welche sich in der Nähe einer Befestigungsvorrichtung des Wischblatts, beispielsweise eine Befestigungsvorrichtung für einen Wischarm, befindet. Dadurch kann eine Scheibenwischvorrichtung zur Verfügung gestellt werden, welche eine besonders gute Anpassung an die Krümmung einer Scheibe ermöglicht. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine hohe Wischqualität bereitgestellt wird.

Gemäß Ausführungsformen des Wischblatts, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln **αₙ zum Unterteil 12 verlaufen die zwischen einem unteren Winkelgrenzwert αₙᵤ und einem oberen Grenzwert αₙₒ liegen. Gemäß Ausführungsformen, ist der untere Winkelgrenzwert αₙᵤ = 10°, insbesondere αₙᵤ = 15° insbesondere αₙᵤ = 20° und der obere Winkelgrenzwert αₙₒ = 80°, insbesondere αₙₒ = 90° insbesondere αₙₒ = 100°.** Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung bereitgestellt werden, mit welcher ein weitgehend gleichmäßiger Anpressdruck auf die Scheibe erzeugt werden kann, so dass eine verbesserte Anpassung des Wischblatts an die Scheibe und eine hohe Wischqualität bereitgestellt wird.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang einer Längserstreckung 8 des Wischblatts 2 verändert, insbesondere in einem ersten Bereich stetig verkleinert und in einem zweiten Bereich stetig vergrössert. Der Abstand h zwischen dem Oberteil 10 und dem Unterteil 12 entlang der Längserstreckung 8 des Wischblatts 2 kann auch einen Bereich umfassen, in welchem der Abstand h zwischen dem Oberteil 10 und dem Unterteil 12 entlang der Längserstreckung 8 des Wischblatts 2 im Wesentlichen konstant ist. Gemäß Ausführungsformen, kann der Abstand h zwischen dem Oberteil 10 und dem Unterteil 12 entlang der Längserstreckung 8 des Wischblatts 2 von einem inneren Abstandswert h_{J} zu einem äußeren Abstandswert h_{A}, insbesondere monoton, insbesondere streng monoton abnehmen.

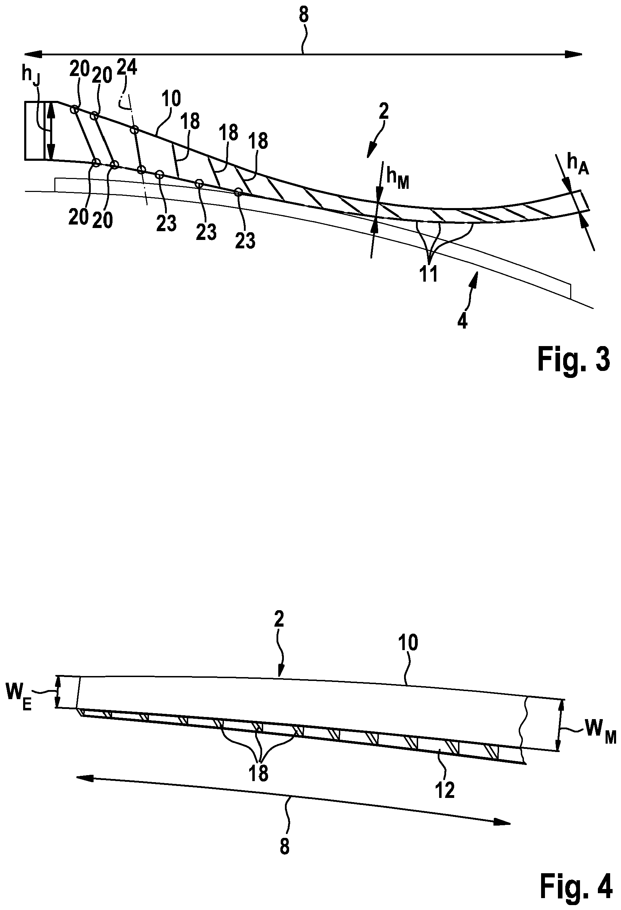

Gemäß Ausführungsformen, die mit anderen Ausführungsformen kombiniert werden können, wie beispielhaft in Fig. 3 dargestellt, kann der Abstand h zwischen dem Oberteil 10 und dem Unterteil 12 entlang der Längserstreckung 8 des Wischblatts 2 in einem ersten Bereich des Wischblatts 2 von einem inneren Abstandswert h_{J} zu einem mittleren Abstandswert h_{M} abnehmen, insbesondere stetig bzw. monoton abnehmen, und in einem zweiten Bereich des Wischblatts 2 von dem mittleren Abstandswert h_{M} zum äußeren Abstandswert h_{A} zunehmen, insbesondere monoton, insbesondere streng monoton zunehmen. Der mittlere Abstandswert h_{M} muss nicht zwingenderweise in der Mitte der Längserstreckung des Wischblatts angeordnet sein. Der mittlere Abstandswert h_{M} kann zu einer äußeren Position oder einer inneren Position des Wischblatts hin verschoben sein.

In diesem Zusammenhang sei darauf hingewiesen, dass in der vorliegenden Anmeldung unter einer äußere Position des Wischblatts das Ende des Wischblatts, zu verstehen ist, welche sich an einem Befestigungsvorrichtungsfernen Ende des Wischblatts befindet. Entsprechend ist in der vorliegenden Anmeldung unter einer "inneren Position" eine Position des Wischblatts zu verstehen, welche sich in der Nähe einer Befestigungsvorrichtung des Wischblatts, beispielsweise eine Befestigungsvorrichtung für einen Wischarm, befindet.

Gemäß Ausführungsformen der Scheibenwischvorrichtung, welche mit anderen Ausführungsformen kombiniert werden können, sind die Verbindungselemente 18 derart konfiguriert, dass der sich zu einem Wischblattende hin verändernde Abstand zwischen dem Oberteil 10 und dem Unterteil 12 entlang einer Längserstreckung 8 des Wischblatts 2 ein Abstandsminimum, beispielsweise ein Abstandsminimum mit dem mittleren Abstandswert h_{M}, durchläuft. Die Abstand zwischen dem Oberteil 10 und dem Unterteil 12 entlang der Längserstreckung 8 des Wischblatts wird vor allem durch die Längen der Verbindungselemente 18 und deren Winkel αₙ der Längsachsen 24 relativ zum Unterteil 12 bestimmt.

Gemäß Ausführungsformen des Wischblatts, welche mit anderen Ausführungsformen kombiniert werden können, beträgt der **inneren Abstandswert h_{J} mindestens 15 mm, insbesondere mindestens 25 mm, insbesondere mindestens 35 mm.** Gemäß Ausführungsformen, welche mit anderen Ausführungsformen kombiniert werden können, beträgt der äußere Abstandswert h_{A} **mindestens 10 mm, insbesondere mindestens 12,5 mm, insbesondere mindestens 15 mm.** Gemäß Ausführungsformen, welche mit anderen Ausführungsformen kombiniert werden können, beträgt der mittlere Abstandswert h_{M} **mindestens 7,5 mm, insbesondere mindestens 7,5 mm, insbesondere mindestens 12,5 mm.**

Wie in den Figuren 1 bis 3 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung. So können die Wischblätter bzw. die Scheibenwischvorrichtungen bei entsprechender Ausgestaltung werkzeugfallend zur Verfügung gestellt werden. Darüber hinaus wird durch die Verwendung von Filmscharnieren, insbesondere durch die einteilig Ausführung der Filmscharniere mit den Verbindungselementen und dem Oberteil und/oder dem Unterteil eine Herstellung im Spritzgussverfahren ermöglicht.

Gemäß Ausführungsformen der Offenbarung wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren weist das Oberteil des Wischblatts entlang einer Längserstreckung des Wischblatts eine variierende Dicke auf. Insbesondere nimmt die Dicke des Oberteils entlang der Längserstreckung des Wischblatts zu einem Ende des Wischblatts hin ab.

Gemäß Ausführungsformen, nimmt die Dicke des Oberteils entlang der Längserstreckung des Wischblatts ab, insbesondere monoton, insbesondere streng monoton, ab. Somit wird eine Scheibenwischvorrichtung bereitgestellt, welche ein zum Ende des Wischblatts hin abnehmendes Trägheitsmoment, insbesondere ein zum Ende des Wischblatts hin abnehmendes, insbesondere monoton, insbesondere streng monoton, abnehmendes Trägheitsmoment, aufweist. Dadurch kann eine Scheibenwischvorrichtung zur Verfügung gestellt werden, welche eine besonders gute Anpassung an die Krümmung einer Scheibe ermöglicht.

Gemäß Ausführungsformen der Offenbarung, die mit anderen Ausführungsformen kombiniert werden können, weist das Unterteil des Wischblatts entlang einer Längserstreckung des Wischblatts eine variierende Dicke auf. Insbesondere nimmt die Dicke des Unterteils entlang der Längserstreckung des Wischblatts zu einem Ende des Wischblatts hin ab. Gemäß Ausführungsformen, nimmt die Dicke des Unterteils entlang der Längserstreckung des Wischblatts ab, insbesondere monoton, insbesondere streng monoton, ab. Somit wird eine Scheibenwischvorrichtung bereitgestellt, welche ein zum Ende des Wischblatts hin abnehmendes Trägheitsmoment, insbesondere ein zum Ende des Wischblatts hin abnehmendes, insbesondere monoton, insbesondere streng monoton, abnehmendes Trägheitsmoment, aufweist. Dadurch kann eine Scheibenwischvorrichtung zur Verfügung gestellt werden, welche eine besonders gute Anpassung an die Krümmung einer Scheibe ermöglicht.

In diesem Zusammenhang sei darauf hingewiesen, dass in der vorliegenden Anmeldung unter dem Ende des Wischblatts, eine äußere Position des Wischblatts zu verstehen ist, welche sich an einem Befestigungsvorrichtungsfernen Ende des Wischblatts befindet. Entsprechend ist in der vorliegenden Anmeldung unter einer "inneren Position" eine Position des Wischblatts zu verstehen, welche sich in der Nähe einer Befestigungsvorrichtung des Wischblatts, beispielsweise eine Befestigungsvorrichtung für einen Wischarm, befindet.

Beispielsweise kann das langgestreckte Oberteil 10 und/oder das langgestreckte Unterteil 12 an einer äußeren Position, an welchem die Enden des Oberteils und des Unterteils miteinander verbunden sein können, eine äußere Dicke D_{E} und an einer inneren Position, an welchem das Wischblatt drehbar gelagert sein kann, eine innere Dicke D_{M} aufweisen.

Gemäß Ausführungsformen des Wischblatts, welche mit anderen hierin beschrieben Ausführungsformen kombiniert werden können, ist die **äußere Dicke D_{E} des Oberteils und/oder des Unterteils, mindestens 1,5 mm, insbesondere mindestens 2,0 mm, insbesondere mindestens 3,0 mm.** Ausführungsformen des Wischblatts, welche mit anderen hierin beschrieben Ausführungsformen kombiniert werden können, ist **die innere Dicke D_{M} des Oberteils und/oder des Unterteils, mindestens 2,0 mm, insbesondere mindestens 2,5 mm, insbesondere mindestens 3,0 mm.**

Wie beispielhaft in Figur 4 dargestellt ist, ist das Wischblatt gemäß Ausführungsformen derart konfiguriert, dass eine Breite des Unterteils und/oder eine Breite des Oberteils entlang der Längserstreckung des Wischblatts zu einem Wischblattende hin abnimmt, insbesondere monoton, insbesondere streng monoton, abnimmt. Somit wird eine Scheibenwischvorrichtung bereitgestellt, welche ein zum Ende des Wischblatts hin abnehmendes Trägheitsmoment, insbesondere ein zum Ende des Wischblatts hin abnehmendes, insbesondere monoton, insbesondere streng monoton, abnehmendes Trägheitsmoment, aufweist. Dadurch kann eine Scheibenwischvorrichtung zur Verfügung gestellt werden, welche eine besonders gute Anpassung an die Krümmung einer Scheibe ermöglicht.

Beispielsweise kann das Wischblatt 2, wie es exemplarisch in Fig.4 dargestellt ist, an einer äußeren Position, an welchem die Enden des langgestreckten Oberteils 10 und des Unterteils 12 miteinander verbunden sein können, eine äußere Breite W_{E} und an einer inneren Position, an welchem das Wischblatt 2 drehbar gelagert sein kann, eine innere Breite W_{M} aufweisen. Gemäß Ausführungsformen, entspricht die Breite des Wischblatts der Breite des Oberteils und/oder des Unterteils. Gemäß weiteren Ausführungsformen können sich die Breite des Oberteils und die Breite des Unterteils unterscheiden. Zum Beispiel kann die Breite des Unterteils größer sein als die Breite des Oberteils oder umgekehrt.

Gemäß Ausführungsformen des Wischblatts, welche mit anderen hierin beschrieben Ausführungsformen kombiniert werden können, ist die **äußere Breite W_{E} des Wischblatts, insbesondere des Oberteils und/oder des Unterteils, mindestens 15 mm, insbesondere mindestens 20 mm, insbesondere mindestens 25 mm.** Gemäß Ausführungsformen des Wischblatts, welche mit anderen hierin beschrieben Ausführungsformen kombiniert werden können, ist **die innere Breite W_{M} des Wischblatts insbesondere des Oberteils und/oder des Unterteils, mindestens 20 mm, insbesondere mindestens 25 mm, insbesondere mindestens 30 mm.**

Somit wird eine Scheibenwischvorrichtung bereitgestellt, welche ein zum Ende des Wischblatts hin abnehmendes, insbesondere monoton abnehmendes, insbesondere streng monoton abnehmendes, Trägheitsmoment aufweist. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine verbesserte Anpassung an die Scheibe und eine hohe Wischqualität bereitgestellt wird.

Gemäß Ausführungsformen der Offenbarung wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren weist das Unterteil des Wischblatts entlang einer Längserstreckung des Wischblatts eine variierende Dicke auf.

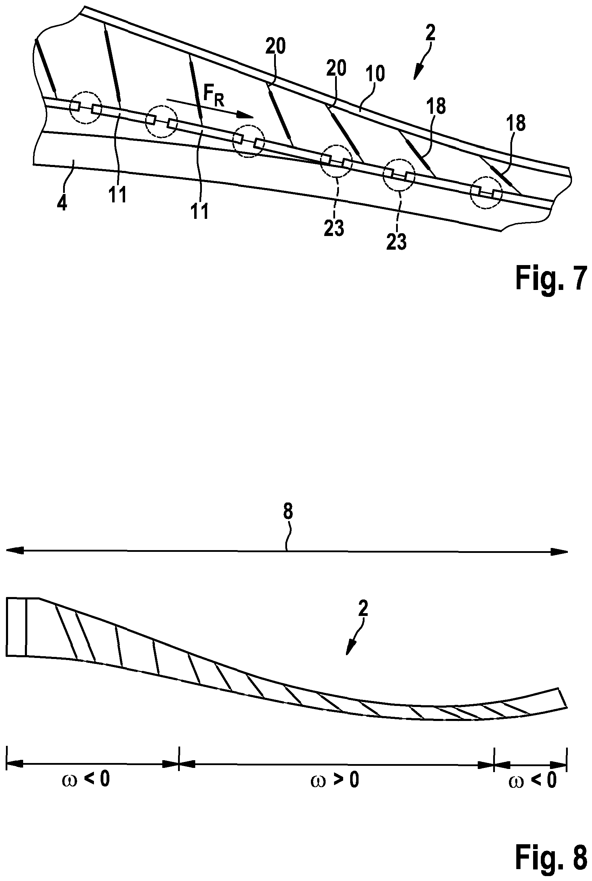

Gemäß Ausführungsformen, welche mit anderen hierin beschriebenen Ausführungsformen kombiniert werden können, weist das Unterteil mehrere Bereiche mit einer geringeren Dicke und mehrere Bereiche mit einer höheren Dicke auf, wie es beispielhaft in Figur 7 dargestellt ist. Typischerweise sind die Bereiche mit geringerer Dicke und die Bereiche mit höherer Dicke abwechselnd entlang der Längserstreckung 8 des Wischblatts 2 angeordnet.

Gemäß Ausführungsformen, welche mit anderen hierin beschriebenen Ausführungsformen kombiniert werden können, werden die Bereiche geringerer Dicke durch Filmscharniere, insbesondere zweite Filmscharnier 23 gebildet, die mit den Bereichen höherer Dicke verbunden sind. Die Filmscharniere, welche die Bereiche mit höherer Dicke verbinden, können einteilig mit den Bereichen höherer Dicke ausgeführt sein. Dadurch wird eine Scheibenwischvorrichtung mit einer verbesserten Anpassungsfähigkeit an eine Scheibe bereitgestellt, wodurch eine hohe Wischqualität gewährleistet werden kann.

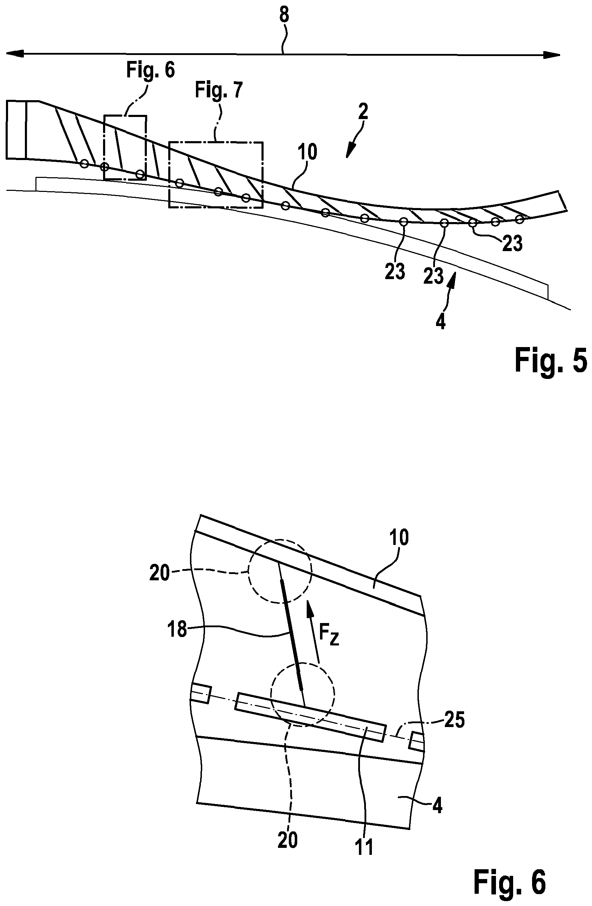

Gemäß Ausführungsformen, welche mit anderen hierin beschriebenen Ausführungsformen kombiniert werden können, umfasst das Unterteil 12 mehrere Unterteilsegmente 11, welche gelenkig miteinander verbunden sind, wie es beispielhaft in Fig. 5 dargestellt ist. Die Unterteilsegmente 11 können mittels eines zweiten Filmscharniers 23, welches insbesondere einteilig mit den Unterteilsegmenten 11 ausgeführt ist, miteinander verbunden sein.

Gemäß Ausführungsformen, welche mit anderen hierin beschriebenen Ausführungsformen kombiniert werden können, ist eine Mehrzahl der Verbindungselemente 18 mit den Unterteilbereichen mit höherer Dicke verbunden, wie es beispielhaft in den Figuren 5 bis 7 dargestellt ist, insbesondere in etwas mittig mit den Unterteilbereichen mit höherer Dicke verbunden. Wie in Fig. 6 veranschaulicht, sind die Verbindungselemente 18 konfiguriert, um eine Kraft F_{z} in Richtung der Längsachsen 24 der Verbindungselemente 18 zu übertragen. Typischerweise sind die Verbindungselemente 18 knicksteif ausgebildet.

Gemäß Ausführungsformen, in welchen das Unterteil 12 Unterteilsegmente 11 umfasst, ist eine Mehrzahl der Verbindungselemente 18 mit den Unterteilsegmenten 11 verbunden, insbesondere in etwas mittig mit den Unterteilsegmenten 11 verbunden. Wie in Fig. 7 veranschaulicht, sind die Unterteilsegmente 11 konfiguriert, um eine Kraft F_{R} entlang der Längserstreckung 8 des Wischblatts 2, insbesondere in Richtung der Längsachsen 25 der Unterteilsegmente 11 zu übertragen. Typischerweise sind die Unterteilsegmente 11 knicksteif ausgebildet. Dadurch kann eine Scheibenwischvorrichtung zur Verfügung gestellt werden, mit welcher einen weitgehend gleichmäßigen Anpressdruck der Scheibenwischvorrichtung auf die Scheibe realisierbar ist, wodurch eine hohe Wischqualität gewährleistet wird.

Gemäß Ausführungsformen der Offenbarung, die mit anderen hierin beschriebenen Ausführungsformen kombiniert werden können, wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Des Weiteren ist das Wischblatt derart konfiguriert, dass das Wischblatt entlang der Längserstreckung des Wischblatts mindestens eine Krümmungsänderung aufweist, insbesondere einen Vorzeichenwechsel in der Krümmung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Fig. 8 gezeigt ist. Somit kann eine Scheibenwischvorrichtung zur Verfügung gestellt werden mit welcher ein weitgehend gleichmäßiger Anpressdruck auf die Scheibe realisiert werden kann. Ferner kann eine Scheibenwischvorrichtung bereitgestellt werden, welche eine verbesserte Anpassung an die Scheibe und eine hohe Wischqualität aufweist.

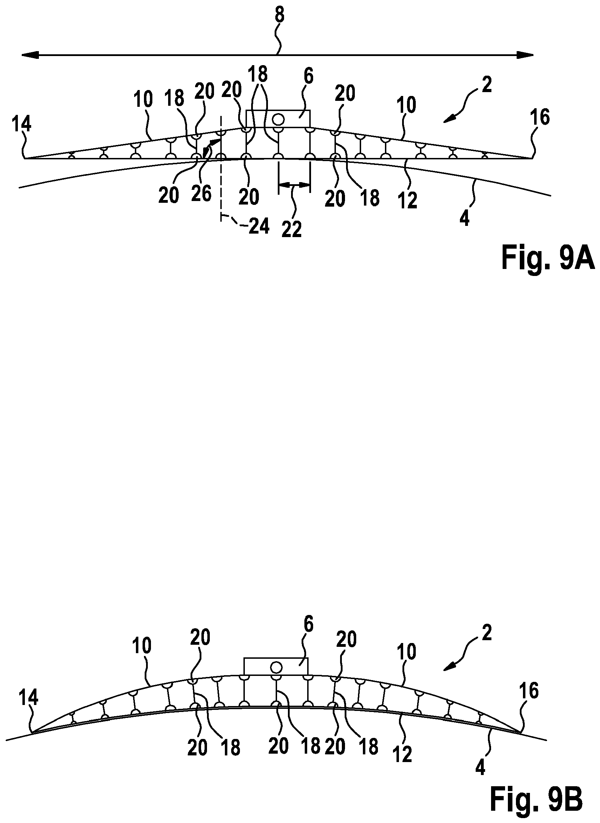

Im Folgenden werden Aspekte einer beispielhafte Scheibenwischvorrichtung beschrieben, für welche die hierin beschriebenen Ausführungsformen der Scheibenwischvorrichtung, insbesondere die hierin beschriebenen Strukturvarianten, besonders vorteilhaft sind
Figuren 9A und 9B zeigen schematische Darstellungen eines Wischblatts 2 in einer Grundstellung (Figur 9A) und in einer an eine Scheibe angelegten Stellung (Figur 9B) gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 9A in einer Grundstellung, d.h. in einem unbelasteten Zustand, in dem das Wischblatt 2 zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in den Figuren 9A und 9B exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, dass das Oberteil 10 zweiteilig ausgestaltet ist, wobei dann jeweils ein Ende der beiden Teile des zweiteiligen Oberteils 10 an der Halterung 6 befestigt sind.

Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen die Gelenk durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden. In Figur 9A ist stellvertretend für die Abstände zwischen jeweils zwei Verbindungselementen 18 ein Abstand 22 dargestellt.

Fig. 9B zeigt eine schematische Darstellung des Wischblatts 2 nach Fig. 9A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 9B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich typischerweise an der dem Oberteil 10 abgewandten Unterseite des Unterteils 12 eine Wischlippe, welche zum Wischen auf der Scheibe 4 aufsetzt. Aus Gründen der Übersichtlichkeit ist die Wischlippe in den Figuren 9A und 9B nicht dargestellt.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

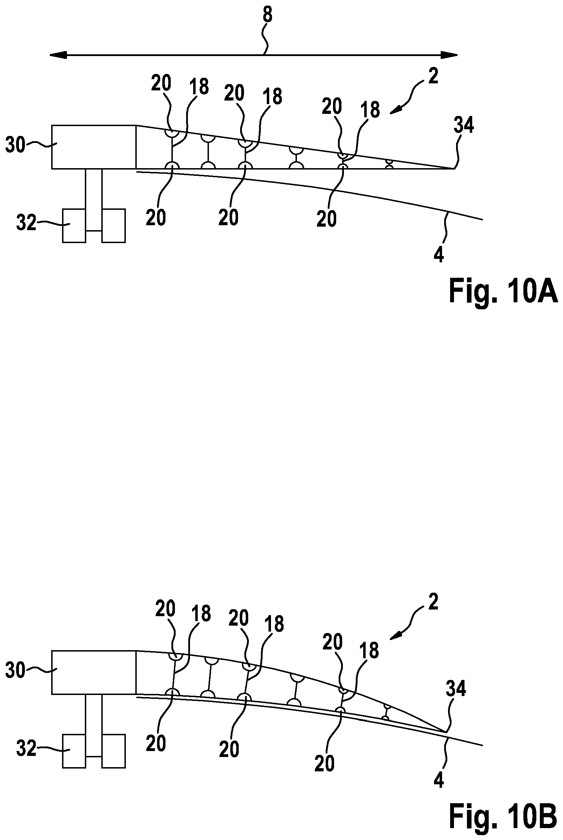

Figuren 9A und 9B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 9A und 9B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 10A und 10B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 10A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 2, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 2 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 10A prinzipiell derjenigen nach Fig. 10A.

Fig. 10B zeigt eine schematische Darstellung des Wischblatts 2 mit integriertem Wischerarm 30 nach Fig. 10B in einer an die Scheibe 4 angelegten Stellung. Auch hier wirken von unten aus der Richtung der Scheibe 4 Druckkräfte auf das Unterteil 12 des Wischblatts 2, so dass sich das Unterteil 12 und das Oberteil 10 in Richtung der Scheibe 4 biegen.

Sowohl in FIG. 9A als auch in FIG. 10A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

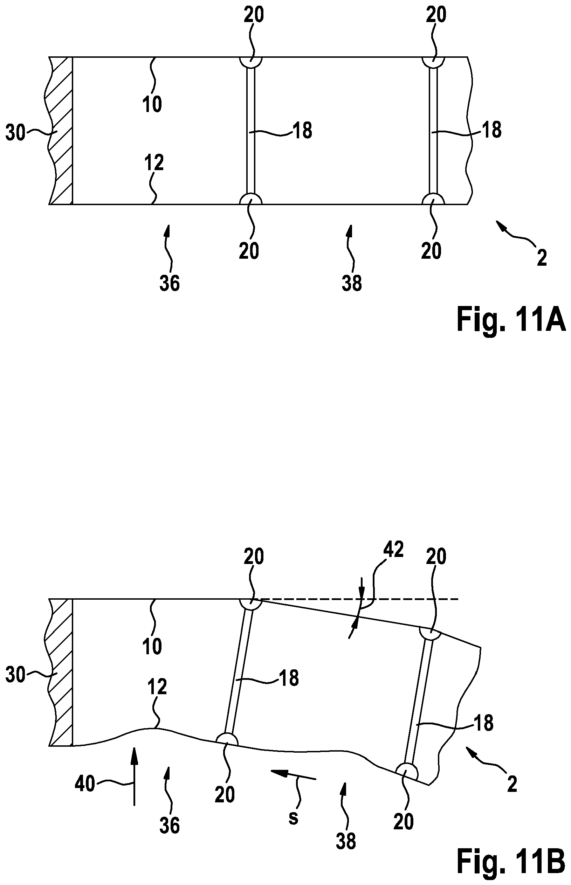

Fig. 11A zeigt eine schematische Darstellung eines Ausschnitts des Wischblatts 2 gemäß dem Ausführungsbeispiel nach Fig. 10A, in dem sich das Wischblatt 2 in der Grundstellung befindet. Dargestellt ist der linke Endbereich des Wischblatts 2, in dem ein Ende des Oberteils 10 und ein Ende des Unterteils 12 an dem Befestigungsteil 30 befestigt sind. Fig. 11A zeigt ausgehend von dem Übergang vom Befestigungsteil 30 zu dem Wischblatt 2 die ersten beiden Verbindungselemente 18, die zwei Wischblattelemente 36 und 38 begrenzen. Die Verbindungselemente 18 sind über Drehgelenke 20 an dem Oberteil 10 und dem Unterteil 12 befestigt.

Fig. 11B zeigt eine schematische Darstellung eines Ausschnitts des Wischblatts 2 gemäß dem Ausführungsbeispiel nach Fig. 10B, in dem das Wischblatt 2 an die Scheibe 4 angelegt ist. Es wirken von unten aus Richtung der Scheibe Druckkräfte auf das Unterteil 12. Stellvertretend für die Druckkräfte ist in der Fig. 10B eine Druckkraft 40 dargestellt. Die Druckkraft 40 bewirkt ein Wölben und Verbiegen des Unterteils 12 des Wischblattelements 36. Dadurch wird das Drehgelenk 20 des ersten Verbindungselements 18 um einen Weg s nach links verschoben. Das zweite Wischblattelement 38 biegt sich nach unten in die Richtung, aus der die Druckkraft 40 kommt, und schmiegt sich an die Scheibe an. Dabei entsteht zwischen dem ersten Wischblattelement 36 und dem zweiten Wischblattelement 38 ein Winkel 42.

Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 2.

Gemäß den hier beschriebenen Ausführungsformen können Fin-Ray Scheibenwischvorrichtung Wischer für Fahrzeugscheiben auf besonders günstige Weise und/oder für eine Mehrzahl unterschiedlicher Einsatzgebiete hergestellt werden. Die herein beschriebenen Ausführungsformen der Scheibenwischvorrichtung ermöglichen eine besonders gute Anpassung an die Krümmung einer Scheibe, so dass ein besonders gutes und exaktes Wischen der Scheibe gewährleistet wird. Nicht gewischte Bereiche der Scheibe und eine Schleierbildung auf der Scheibe können weitgehend vermieden werden. Zudem ermöglicht die konstruktive Ausgestaltung der Scheibenwischvorrichtung einen weitgehend gleichmäßigen Anpressdruck der Scheibenwischvorrichtung auf der Scheibe, so dass eine hohe Wischqualität bereitgestellt wird.

## Patentansprüche

1. Scheibenwischvorrichtung nach dem Flossenstrahl-Prinzip, für ein Fahrzeug, insbesondere ein Kraftfahrzeug, umfassend ein Wischblatt (2) mit
- einem langgestreckten Oberteil (10), das zumindest teilweise biegbar ausgestaltet ist,
- einem langgestreckten Unterteil (12), das zumindest teilweise biegbar ausgestaltet ist, und
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen, wobei die Verbindungselemente (18) relativ zum Unterteil (12) so angeordnet sind, dass sich in einem unbelasteten Zustand des Wischblatts (2) ein Winkel αₙ der jeweiligen Längsachsen der Verbindungselemente (18) relativ zum Unterteil (12) zumindest teilweise entlang einer Längserstreckung (8) des Wischblatts (2) verändert.

2. Scheibenwischvorrichtung nach Anspruch 1, wobei das Wischblatt (2) zumindest einen ersten Bereich aufweist, in dem der Winkel α der Längsachsen der Verbindungselemente (18) relativ zum Unterteil (12) entlang einer Längserstreckung (8) des Wischblatts (2) zu einem Wischblattende hin abnimmt, und wobei die Scheibenwischvorrichtung zumindest einen zweiten Bereich aufweist in dem der Winkel αₙ der Längsachsen der Verbindungselemente (18) relativ zum Unterteil (12) entlang einer Längserstreckung (8) des Wischblatts (2) zu einem Wischblattende hin zunimmt.

3. Scheibenwischvorrichtung nach Anspruch 1 oder 2, wobei die Verbindungselemente (18) derart konfiguriert sind, dass sich der Abstand zwischen dem Oberteil (10) und dem Unterteil (12) zumindest teilweise entlang einer Längserstreckung (8) des Wischblatts (2) verändert, insbesondere dass sich der Abstand zwischen dem Oberteil (10) und dem Unterteil (12) zumindest teilweise entlang einer Längserstreckung (8) des Wischblatts (2) verkleinert und teilweise vergrößert.

4. Scheibenwischvorrichtung nach Anspruch 3, wobei die Verbindungselemente (18) derart konfiguriert sind, dass der sich verändernde Abstand zwischen dem Oberteil (10) und dem Unterteil (12) entlang einer Längserstreckung (8) des Wischblatts (2) zu einem Wischblattende hin ein Abstandsminimum durchläuft.

5. Scheibenwischvorrichtung nach einem der vorherigen Ansprüche, wobei die Verbindungselemente (18) gelenkig, insbesondere mittels eines ersten Filmscharniers (20) mit dem Unterteil (12) und/oder Oberteil (10) verbunden sind.

6. Scheibenwischvorrichtung nach einem der vorherigen Ansprüche, wobei die Breite des Unterteils (12) und/ oder die Breite des Oberteils (10) entlang der Längserstreckung (8) des Wischblatts (2) zu einem Wischblattende abnimmt.

7. Scheibenwischvorrichtung nach einem der vorherigen Ansprüche, wobei die Dicke des Oberteils (10) entlang der Längserstreckung (8) des Wischblatts (2) zu einem Wischblattende abnimmt.

8. Scheibenwischvorrichtung nach einem der vorherigen Ansprüche, wobei die Dicke des Unterteils (12) entlang der Längserstreckung (8) des Wischblatts (2) variiert.

9. Scheibenwischvorrichtung nach Anspruch 8, wobei das Unterteil (12) mehrere Unterteilsegmente (11) umfasst, welche gelenkig miteinander verbunden sind.

10. Scheibenwischvorrichtung nach Anspruch 9, wobei die Unterteilsegmente (11) mittels eines zweiten Filmscharniers (23), welches insbesondere einteilig mit den Unterteilsegmenten ausgeführt ist, miteinander verbunden sind.

11. Scheibenwischvorrichtung nach einem der Ansprüche 9 und 10, wobei eine Mehrzahl der Verbindungselemente (18) mit den Unterteilsegmenten verbunden ist, insbesondere zwischen zwei der zweiten Filmscharniere verbunden sind.

12. Scheibenwischvorrichtung nach einem der vorherigen Ansprüche, wobei die Scheibenwischvorrichtung aus mindestens einem Material aus der Gruppe bestehend aus: POM, PA, TPE, insbesondere TPE-S, TPE-O, TPE-U, TPE-A TPE-V und TPE-E ist.

13. Scheibenwischvorrichtung nach einem der vorherigen Ansprüche, wobei die Scheibenwischvorrichtung durch ein 2-Komponenten Spritzverfahren hergestellt ist.

14. Scheibenwischervorrichtung nach einem der vorherigen Ansprüche, wobei die Krümmung des Oberteils und/oder des Unterteils in Bezug auf die Längsstreckung einen oder mehrere Vorzeichenwechsel aufweist.

## Claims

1. Windscreen wiper device according to the fin ray principle, for a vehicle, in particular a motor vehicle, comprising a wiper blade (2) having
- an elongate upper part (10), which is configured to be at least partially bendable,
- an elongate lower part (12), which is configured to be at least partially bendable, and
- a plurality of connecting elements (18) for connecting the upper part (10) and the lower part (12), wherein the connecting elements (18) are spaced apart from one another along a longitudinal extent (8) of the wiper blade (2), wherein the connecting elements (18) are designed in order to permit a movement of the upper part (10) and of the lower part relative to each other with a movement component along a longitudinal extent (8) of the wiper blade (2), wherein the connecting elements (18) are arranged relative to the lower part (12) in such a manner that, in an unloaded state of the wiper blade (2), an angle αₙ of the respective longitudinal axes of the connecting elements (18) relative to the lower part (12) at least partially changes along a longitudinal extent (8) of the wiper blade (2).

2. Windscreen wiper device according to Claim 1, wherein the wiper blade (2) has at least one first region in which the angle α of the longitudinal axes of the connecting elements (18) relative to the lower part (12) decreases along a longitudinal extent (8) of the wiper blade (2) towards a wiper blade end, and wherein the windscreen wiper device has at least one second region in which the angle αₙ of the longitudinal axes of the connecting elements (18) relative to the lower part (12) increases along a longitudinal extent (8) of the wiper blade (2) towards a wiper blade end.

3. Windscreen wiper device according to Claim 1 or 2, wherein the connecting elements (18) are configured in such a manner that the distance between the upper part (10) and the lower part (12) at least partially changes along a longitudinal extent (8) of the wiper blade (2), in particular in that the distance between the upper part (10) and the lower part (12) is at least partially reduced and partially increased along a longitudinal extent (8) of the wiper blade (2).

4. Windscreen wiper device according to Claim 3, wherein the connecting elements (18) are configured in such a manner that the changing distance between the upper part (10) and the lower part (12) passes through a distance minimum along a longitudinal extent (8) of the wiper blade (2) towards one wiper blade end.

5. Windscreen wiper device according to one of the preceding claims, wherein the connecting elements (18) are connected to the lower part (12) and/or upper part (10) in an articulated manner, in particular by means of a first film hinge (20).

6. Windscreen wiper device according to one of the preceding claims, wherein the width of the lower part (12) and/or the width of the upper part (10) decreases along the longitudinal extent (8) of the wiper blade (2) to one wiper blade end.

7. Windscreen wiper device according to one of the preceding claims, wherein the thickness of the upper part (10) decreases along the longitudinal extent (8) of the wiper blade (2) to one wiper blade end.

8. Windscreen wiper device according to one of the preceding claims, wherein the thickness of the lower part (12) varies along the longitudinal extent (8) of the wiper blade (2).

9. Windscreen wiper device according to Claim 8, wherein the lower part (12) comprises a plurality of lower part segments (11) which are connected to one another in an articulated manner.

10. Windscreen wiper device according to Claim 9, wherein the lower part segments (11) are connected to one another by means of a second film hinge (23) which is formed in particular integrally with the lower part segments.

11. Windscreen wiper device according to either of Claims 9 and 10, wherein a plurality of the connecting elements (18) are connected to the lower part segments, in particular are connected between two of the second film hinges.

12. Windscreen wiper device according to one of the preceding claims, wherein the windscreen wiper device is made from at least one material from the group consisting of: POM, PA, TPE, in particular TPE-S, TPE-O, TPE-U, TPE-A, TPE-V and TPE-E.

13. Windscreen wiper device according to one of the preceding claims, wherein the windscreen wiper device is produced by a two-component injection-moulding method.

14. Windscreen wiper device according to one of the preceding claims, wherein the curvature of the upper part and/or of the lower part has one or more changes of sign with respect to the longitudinal extent.

## Revendications

1. Dispositif d'essuie-glace selon le principe des rayons de nageoires, pour un véhicule, en particulier un véhicule automobile, comprenant un balai d'essuie-glace (2) comprenant
- une partie supérieure allongée (10) qui est configurée sous forme au moins en partie flexible,
- une partie inférieure allongée (12) qui est configurée sous forme au moins en partie flexible, et
- plusieurs éléments de liaison (18) pour relier la partie supérieure (10) et la partie inférieure (12), les éléments de liaison (18) étant espacés les uns des autres le long d'une étendue longitudinale (8) du balai d'essuie-glace (2), les éléments de liaison (18) étant conçus pour permettre un déplacement de la partie supérieure (10) et de la partie inférieure l'une par rapport à l'autre avec une composante directionnelle le long d'une étendue longitudinale (8) du balai d'essuie-glace (2), les éléments de liaison (18) étant disposés par rapport à la partie inférieure (12) de telle sorte que dans un état non sollicité du balai d'essuie-étendue longitudinale (8) du balai d'essuie-glace (2).

2. Dispositif d'essuie-glace selon la revendication 1, le balai d'essuie-glace (2) présentant au moins axes longitudinaux des éléments de liaison (18) par rapport à la partie inférieure (12) diminue le long d'une étendue longitudinale (8) du balai d'essuie-glace (2) jusqu'à une extrémité de balai d'essuie-glace, et le dispositif d'essuie-glace présentant au moins une deuxième région dans ₙ des axes longitudinaux des éléments de liaison (18) par rapport à la partie inférieure (12) augmente le long d'une étendue longitudinale (8) du balai d'essuie-glace (2) jusqu'à une extrémité de balai d'essuie-glace.

3. Dispositif d'essuie-glace selon la revendication 1 ou 2, dans lequel les éléments de liaison (18) sont configurés de telle sorte que la distance entre la partie supérieure (10) et la partie inférieure (12) varie au moins en partie le long d'une étendue longitudinale (8) du balai d'essuie-glace (2), en particulier de telle sorte que la distance entre la partie supérieure (10) et la partie inférieure (12), au moins en partie le long d'une étendue longitudinale (8) du balai d'essuie-glace (2), diminue et augmente en partie.

4. Dispositif d'essuie-glace selon la revendication 3, dans lequel les éléments de liaison (18) sont configurés de telle sorte que la distance variable entre la partie supérieure (10) et la partie inférieure (12) le long d'une étendue longitudinale (8) du balai d'essuie-glace (2) passe, vers une extrémité de balai d'essuie-glace, par un minimum de distance.

5. Dispositif d'essuie-glace selon l'une quelconque des revendications précédentes, dans lequel les éléments de liaison (18) sont reliés de manière articulée, en particulier au moyen d'une première charnière à film (20), à la partie inférieure (12) et/ou à la partie supérieure (10).

6. Dispositif d'essuie-glace selon l'une quelconque des revendications précédentes, dans lequel la largeur de la partie inférieure (12) et/ou la largeur de la partie supérieure (10) le long de l'étendue longitudinale (8) du balai d'essuie-glace (2) diminue jusqu'à une extrémité de balai d'essuie-glace.

7. Dispositif d'essuie-glace selon l'une quelconque des revendications précédentes, dans lequel l'épaisseur de la partie supérieure (10) le long de l'étendue longitudinale (8) du balai d'essuie-glace (2) diminue jusqu'à une extrémité de balai d'essuie-glace.

8. Dispositif d'essuie-glace selon l'une quelconque des revendications précédentes, dans lequel l'épaisseur de la partie inférieure (12) le long de l'étendue longitudinale (8) du balai d'essuie-glace (2) est variable.

9. Dispositif d'essuie-glace selon la revendication 8, dans lequel la partie inférieure (12) comprend plusieurs segments de partie inférieure (11) qui sont reliés les uns aux autres de manière articulée.

10. Dispositif d'essuie-glace selon la revendication 9, dans lequel les segments de partie inférieure (11) sont reliés les uns aux autres au moyen d'une deuxième charnière à film (23) qui est réalisée notamment d'une seule pièce avec les segments de partie inférieure.

11. Dispositif d'essuie-glace selon l'une quelconque des revendications 9 et 10, dans lequel une pluralité des éléments de liaison (18) sont reliés aux segments de partie inférieure, en particulier sont reliés entre deux des deuxièmes charnières à film.

12. Dispositif d'essuie-glace selon l'une quelconque des revendications précédentes, le dispositif d'essuie-glace étant constitué d'au moins un matériau parmi le groupe suivant : POM, PA, TPE, en particulier TPE-S, TPE-O, TPE-U, TPE-A, TPE-V et TPE-E.

13. Dispositif d'essuie-glace selon l'une quelconque des revendications précédentes, le dispositif d'essuie-glace étant fabriqué par un procédé de moulage par injection à deux composants.

14. Dispositif d'essuie-glace selon l'une quelconque des revendications précédentes, dans lequel la courbure de la partie supérieure et/ou de la partie inférieure présente par rapport à l'étendue longitudinale un ou plusieurs changements de signes.
